# EUROPÄISCHE PATENTSCHRIFT

(11) **EP 0 458 734 B1**
(45) Veröffentlichungstag und Bekanntmachung des Hinweises auf die Patenterteilung: **01.12.1993**
(21) Anmeldenummer: 91810285.6
(22) Anmeldetag: 16.04.1991
(51) Int. Cl.: B29D 11/00, B29C 33/38

(54) **Verfahren zur Herstellung von Kontaklinsen**
Process for the production of contact lenses
Procédé pour la fabrication de lentilles de contact

(30) Priorität: 24.04.1990 CH 1376/90
(43) Veröffentlichungstag der Anmeldung: 27.11.1991
(73) Patentinhaber: CIBA-GEIGY AG, 4002 Basel (CH)
(72) Erfinder: Hagmann, Peter, Dr., W-8759 Hösbach-Bahnhof (DE); Höfer, Peter, W-8750 Aschaffenburg (DE)

(56) Entgegenhaltungen:
- WO-A-82/01494
- FR-A- 1 462 519
- US-A- 3 871 803
- US-A- 4 254 065
- US-A- 4 614 624
- JAPANESE PATENT GAZETTE, Woche 9818, Sektion Ch, Klasse A, Accession Nr. 89-136174 [18], Derwent Publications Ltd, Londen, GB; &JP-A-1 082 921 (RICOH) 28-03-1989

## Beschreibung

Die Erfindung betrifft ein Verfahren zur Herstellung von Kontaktlinsen, insbesondere ein Verfahren zur einstufigen Herstellung von weitgehend nachbearbeitungsfreien Kontaktlinsen durch direkte Polymerisation eines Polymerisationsansatzes in einer Giessform, gemäss Oberbegriff des Patentanspruches 1. Unter Polymerisationsansatz werden im folgenden ganz allgemein polymerisierbare Monomere, polymerisierbare Oligomere, polymerisierbare Präpolymere oder polymerisierbare Mischungen davon verstanden.

In jüngerer Zeit wird vielfach versucht, Kontaktlinsen in einem sogenannten einstufigen Formgebungsprozess durch direkte Polymerisation eines Polymerisationsansatzes in einer Giessform herzustellen. Im Gegensatz zu den ursprünglichen Herstellungsverfahren, bei denen die Front- und/oder die Rückfläche der Kontaktlinse an einem Kontaktlinsenrohling durch Materialabtrag erstellt wird, werden bei diesem einstufigen Verfahren die Front- und die Rückfläche der Kontaktlinse allein durch die entsprechenden Formgebungsflächen der Giessform bestimmt. Ziel dieses sogenannten einstufigen Verfahrens ist die Herstellung von weitgehend nachbearbeitungsfreien Kontaktlinsen durch direkte Polymerisation eines Polymerisationsansatzes innerhalb der Giessform. Die Giessformen sind üblicherweise aus Kunststoff und als Einweg-Formen ausgebildet. Jede Giessform wird also nur für die Herstellung einer einzigen Kontaktlinse verwendet. Herstellungsverfahren, die für jede zu fertigende Linse eine separate Einweg-Giessform benutzen, sind beispielsweise in der FR-A-1,462,519 oder in den US Patentschriften US-A-3,871,803, US-A-3,614,624 bzw. US-A-4,455,893 beschrieben. Bei dem in der US-A-4,254,065 beschriebenen Verfahren schliesslich, werden sogenante "Roh-Buttons" durch Spritzgiessen in Giesswerkzeugen hergestellt. Die Fertigung der eigentlichen kundenspezifischen Linsen erfolgt durch materialabtragende Nachbearbeitung der vorgefertigten Roh-Buttons.

Dem eigentlichen Herstellungsprozess für die Kontaktlinse gehen eine Vielzahl von vorbereitenden Arbeiten voraus. So werden gemäss den gewünschten Parametern der späteren Kontaktlinse, wie beispielsweise Linsendurchmesser, Krümmung der Rückfläche und Brechkraft der Linse, Formwerkzeuge für die Herstellung der Giessformen erstellt. Diese Formwerkzeuge, die üblicherweise aus Metall gefertigt sind, werden sodann in sogenannte Formplatten eingebaut, welche wiederum in ein Spritzgiesswerkzeug eingesetzt werden. Jedes Formwerkzeug wird auf diese Weise zur Herstellung einiger Zehntausend Kunststoff-Einweg-Formen benutzt, bevor es durch die hohen mechanischen Beanspruchungen dieses Spritzgiessverfahrens und die hohen Genauigkeitsanforderungen unbrauchbar wird. Jede der auf diese Weise produzierten Einweg-Formen wird sodann für die Herstellung einer einzigen Kontaktlinse verwendet. Nach einer gegebenenfalls noch erforderlichen Nachbehandlung der Kontaktlinse, beispielsweise einem Einfärben der Kontaktlinse oder einer Hydratation von sogenanntem weichem Kontaktlinsenmaterial, welche vorzugsweise in der zugehörigen Giessform erfolgt, wird die Kontaktlinse vorteilhafterweise gleich in ihrer zugehörigen Giessform(hälfte) verpackt und gelagert oder versandt. Die Gesamtheit all dieser Verfahrensschritte wird als sogenannte Fullmold-Technologie bezeichnet. Nachstehend sind die einzelnen Verfahrensschritte in einer Übersicht nochmals angegeben:
(1) Herstellung der Formwerkzeuge
(2) Einbau der Formwerkzeuge in Formplatten
(3) Einsatz der Formplatten in ein Spritzgiesswerkzeug
(4) Spritzgiessen der Kunststoff-Einweg-Formen
(5) Herstellung der Kontaktlinse durch direkte Polymerisation des Polymerisationsansatzes in der Einweg-Form
(6) gegebenenfalls Nachbehandlung der Kontaktlinse
(7) Verpackung der Kontaktlinse in Einweg-Form.

Die Fullmold-Technologie hat sich insbesondere für die Produktion von weichen Kontaktlinsen, beispielsweise solchen, die Poly 2-hydroxyethylmethacrylat (P-HEMA) oder Copolymere dieser Verbindung enthalten, als besonders zweckmässig und wirtschaftlich erwiesen. Weiche Kontaktlinsen werden in relativ grossen Stückzahlen hergestellt. Vor allem aber reicht aufgrund ihrer sehr guten Anpassungseigenschaften an die Form des Auges, insbesondere an die geometrische Beschaffenheit der Cornea, eine relativ geringe Anzahl von Parametersätzen (z.B. Linsendurchmesser und Krümmung der Linsenrückfläche) aus, um einen grossen Bereich von Anpassungsfällen bei Fehlsichtigkeiten abzudecken. Daher hat sich die Fullmold-Technologie in erster Linie für die Herstellung weicher Kontaktlinsen durchgesetzt, da die Kosten und der Zeitaufwand für die unter den Verfahrensschritten (1)-(4) angeführten vorbereitenden Arbeiten aufgrund der relativ geringen Anzahl benötigter verschiedener Formwerkzeuge und der grossen Kontaktlinsen-Stückzahlen je Formwerkzeug anteilsmässig sehr gering ausfallen.

Eine zweite grosse Gruppe von Kontaktlinsen stellen die sogenannten harten Kontaktlinsen und die sogenannten hart/flexiblen Kontaktlinsen dar. Als harte Kontaktlinsen werden beispielsweise solche aus Polymethylmethacrylat (PMMA) bezeichnet, hart/flexible oder auch Rigid-Gas-Permeable (RGP-)Kontaktlinsen werden bevorzugt aus Materialien mit hoher Sauerstoffdurchlässigkeit hergestellt, beispielsweise aus fluor- und/oder silikonhaltigen Polymeren. Aufgrund der relativ grossen Steifigkeit dieser Materialien passen sich harte und hart/flexible Kontaktlinsen nur in geringem Masse an die Geometrie der Cornea des Auges an. Um aber auch bei derartigen Kontaktlinsen einen grösstmöglichen Tragekomfort ohne Reizung des Auges und ohne Druckstellen bei optimaler optischer Korrektur der Fehlsichtigkeit zu ermöglichen, werden insbesondere die Krümmung der Linsenrückfläche und ihr Durchmesser genauestens an die Oberflächenform und Krümmung der Cornea sowie an den Pupillendurchmesser des Auges des Kontaktlinsenträgers angeglichen. Zusammen mit der Vielfalt der unterschiedlich benötigten Brechkraft der Kontaktlinsen ergibt sich eine Vielzahl verschiedener Kontaktlinsen mit bis zu 4000 und mehr unterschiedlichen Parameterwerten bezüglich des Kontaktlinsendurchmessers, der Krümmung der Kontaktlinsenrückfläche - der Auflagefläche auf die Cornea - und der Brechkraft der Kontaktlinse. Daraus ergeben sich für die einzelnen Parameterkombinationen aber auch nur sehr geringe Stückzahlen. Aus diesem Grund werden harte und hart/flexible Kontaktlinsen bislang hauptsächlich durch material-abtragende Formgebung aus Linsenrohlingen hergestellt. Insbesondere die fluor- und/oder silikonhaltigen Polymere sind aber oft nur schwer durch spangebende Verfahren zu bearbeiten, was die Herstellungszeit und die Herstellungskosten für derartige Linsen deutlich erhöht. Überdies ist die Handhabung der Kontaktlinse bei ihrer Bearbeitung relativ umständlich. Es muss vor allem dafür Sorge getragen werden, dass die bereits erstellte Vorder- oder Rückfläche der Kontaktlinse bei der Bearbeitung der zweiten Linsenfläche nicht beschädigt wird. Zudem kommt es bei der spangebenden Bearbeitung oft auch zu Spannungen im Kontaktlinsenmaterial, was manchmal sogar zur Zerstörung der Kontaktlinse führen kann.

Es besteht daher der Wunsch, ein Verfahren zur Herstellung von Kontaktlinsen zu schaffen, welches eine wirtschaftliche Anwendung der Fullmold-Technologie auch bei Kontaktlinsentypen erlaubt, die in zahlreichen verschiedenen Parametern und dementsprechend kleinen Stückzahlen gefertigt werden. Überdies soll das Verfahren auch eine einfache, schnelle und kostengünstige Herstellung von Kontaktlinsen aus spangebend nur schwer oder gar nicht bearbeitbaren Kontaktlinsenmaterialien ermöglichen. Zudem sollen die bei der mechanischen Bearbeitung der Kontaktlinsen oftmals auftretenden, zuvor erwähnten Nachteile weitgehend vermieden werden.

Diese und weitere Aufgaben werden durch eine Verfahrensführung gemäss Kennzeichen des Patentanspruches 1 gelöst. Weitere bevorzugte Verfahrensvarianten sind Gegenstand der abhängigen Patentansprüche.

Im folgenden wird das erfindungsgemässe Verfahren mit Bezugnahme auf die Zeichnungen näher erläutert. Es zeigen in schematisierter Darstellung:
- Fig. 1: eine Übersicht der Erstellung der Giessformenvielfalt und
- Fig. 2: ein Beispiel einer Standard-Giessform mit angedeuteter modifizierter Formgebungsfläche im Axialschnitt.

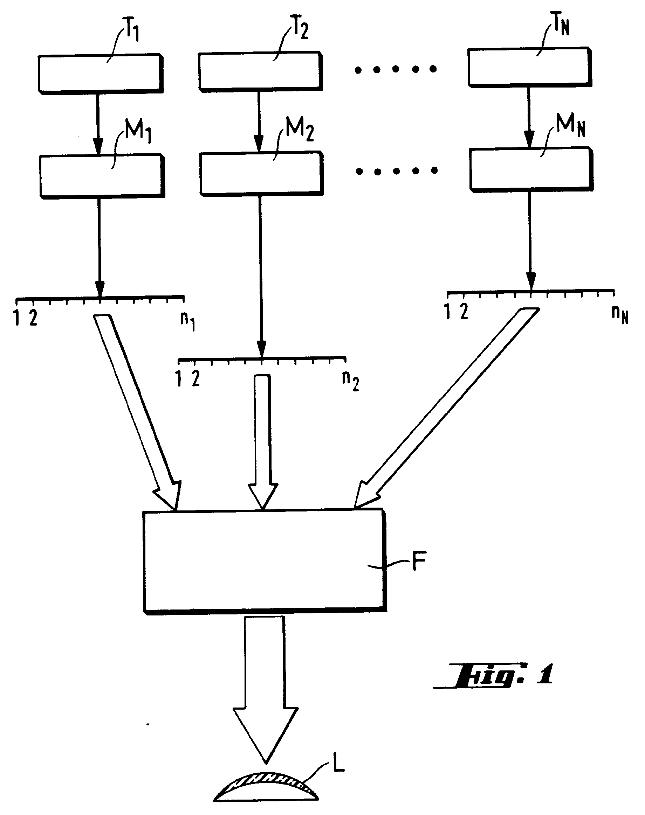

Das in Fig. 1 in einer schematischen Übersichtsdarstellung gezeigte erfindungsgemässe Verfahren verläuft ähnlich dem aus der Herstellung von weichen Kontaktlinsen bekannten Herstellungsverfahren. Auch hier werden zunächst Formwerkzeuge T₁, T₂, ...... , T_{N} bereitgestellt, diese in Formplatten eingebaut und die Formplatten sodann in eine Spritzgiessvorrichtung eingesetzt. Im Spritzgiessverfahren werden sodann damit Einweg-Giessformen M₁, M₂ ...... , M_{N} hergestellt, welche für den eigentlichen Formgebungsprozess F für die Kontaktlinsen L herangezogen werden.

Zum Unterschied von der bekannten Fullmold-Technologie werden die Formwerkzeuge T₁, T₂, ...... , T_{N} jedoch nur in einer begrenzten Anzahl mit wenigen standardisierten Parametern hergestellt. Beispielsweise werden Formwerkzeuge T₁, T₂, ...... , T_{N} mit zwanzig verschiedenen Krümmungsradien für die Kontaktlinsenrückfläche und nur für zwei verschiedene Linsendurchmesser hergestellt. Die Kontaktlinsenvorderfläche ist standardisiert und weist für alle Linsentypen und -durchmesser den gleichen Krümmungsradius auf. Durch Kombination der Parameter Linsendurchmesser und Krümmungsradien können auf diese Weise im Spritzgiessverfahren vierzig verschiedene Einweg-Giessformen M₁, M₂, ...... , M_{N} hergestellt werden. Diese vierzig verschiedenen Einweg-Giessformen umfassen zwanzig Patrizenteile 1 mit zwanzig verschiedenen Krümmungsradien der Formgebungsfläche 3 für die Kontaktlinsenrückseite und zwanzig Matrizenteile 2 mit einheitlichem Krümmungsradius der zweiten Formgebungsfläche 4 für die Kontaktlinsenfrontseite in jeweils zwei verschiedenen Durchmessern.

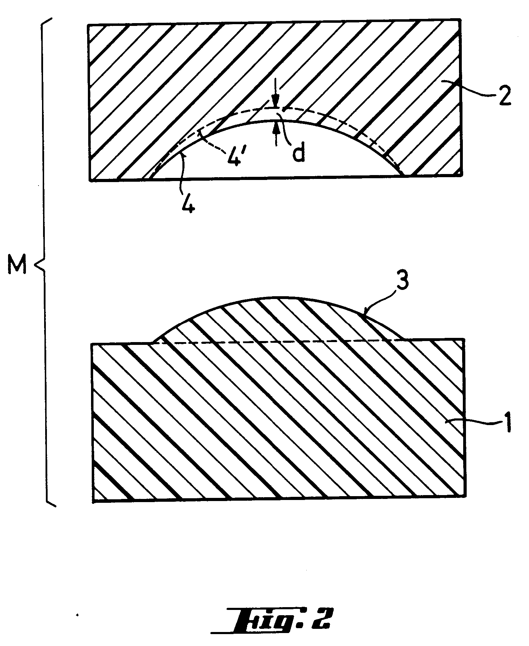

Um mit dieser beschränkten Anzahl von standardisierten Giessformen M dennoch Linsen mit der geforderten Parametervielfalt herstellen zu können, werden die standardisierten Giessformen M in einem weiteren Verfahrensschritt nach Vorgabe modifiziert. Vorzugsweise wird dazu die standardisierte Formgebungsfläche 4 des Matrizenteils 2 für die Frontfläche der Kontaktlinse nachbearbeitet. Beispielsweise wird der Krümmungsradius der Formgebungsfläche 4 durch materialabtragende Bearbeitung verkleinert, wie dies in Fig. 2 anhand der strichlierten Linie 4' angedeutet ist. Auf diese Weise kann gezielt die Brechkraft der später hergestellten Kontaktlinse vorbestimmt werden. Die materialabtragende Bearbeitung kann durch die etablierte spanende Drehtechnik erfolgen, die für die üblicherweise verwendeten Giessformmaterialien, wie beispielsweise Polypropylen oder Polymethylmethacrylat, einen hohen Reifegrad erlangt hat. Der Einsatz von Computer-gesteuerten Drehbänken erlaubt überdies auch einen hohen Automatisierungsgrad dieser bekannten Drehtechnik.

In besonders bevorzugter Weise erfolgt der Materialabtrag jedoch durch eine Laserbearbeitung. Die dabei vorzugsweise verwendeten Excimer-Laser erlauben einen möglichst schonenden Materialabtrag, etwaige Verspannungen im Giessformmaterial treten nicht auf. Besonders vorteilhaft bei der Laser-Bearbeitung der Giessform ist aber die einfache Ablenkbarkeit des Laserstrahls, die bevorzugt Computer-gesteuert erfolgt. Auf diese Weise können die Krümmungsradien nahezu stufenlos verändert werden und auch komplizierte Geometrien einfach erstellt werden, beispielsweise asphärische, aplanatische, bifokale, multifokale oder torische Kontaktlinsen und auch sogenannte binäre Optiken. Aufgrund der besonders einfachen und kurzfristig veränderbaren Steuerung der Ablenkung des Laserstrahls eignet sich die materialabtragende Laserbearbeitung der Giessformen M ganz besonders für sogenannte CAE/CAM-Systeme, wobei CAE für Computer Aided Engineering und CAM für Computer Aided Manufacturing steht. Bei derartigen Fertigungssystemen wird die gewünschte modifizierte Kontur der standardisierten Giessform M mit Hilfe des Computers erstellt und werden die Daten unmittelbar vom Computer an die Steuerung der Laserbearbeitungsvorrichtung weitergeleitet. Bei getrennten "Modellierungs-" und Steuercomputern kann der Steuerdatentransfer auch über ein dazwischengeschaltetes Speichermedium (Datenband, Diskette, Festplatte etc.) erfolgen.

Auf diese Weise werden beispielsweise zu den vierzig standardisierten Patrizenteilen 1 (zwei verschiedene Durchmesser und zwanzig verschiedene Krümmungen der Formgebungsflächen 3 für die Kontaktlinsenrückfläche) hundert verschiedene modifizierte Matrizenteile 2 erstellt, wobei das zur Giessform M₁ gehörige Matrizenteil n₁-fach, das zur Giessform M₂ gehörige Matrizenteil n₂-fach, usw. und das zur Giessform M_{N} gehörige Matrizenteil n_{N}-fach modifiziert wird. In Summe erhält man damit eine grosse Giessformvielfalt mit beispielsweise 4000 verschiedenen Parametern (Durchmesser, Krümmungsradius der Formgebungsfläche für die Kontaktlinsenrückfläche und Krümmungsradius der Formgebungsfläche für die Kontaktlinsenfrontfläche bzw. Brechkraft).

Mit dieser grossen Anzahl verschiedener Giessformen M wird dann der eigentliche Formgebungsschritt F der Kontaktlinsenherstellung durchgeführt. Die Formen werden jeweils mit einem Polymerisationsansatz gefüllt, das Patrizen- und das Matrizenteil 1 und 2 zusammengefügt, wobei sie entweder durch äussere Schliessmittel zusammengepresst werden oder durch Kraftschluss der Giessformhälften 1 und 2 haften. Die Polymerisation des Polymerisationsansatzes erfolgt direkt in den Giessformen M, die zu diesem Zweck innerhalb einer Polymerisationsvorrichtung angeordnet werden. Die Polymerisation erfolgt in bekannter Weise mit Hilfe von Röntgen-, Ultraviolett-, Infrarot- oder Mikrowellenstrahlung oder einer anderen geeigneten energiereichen Strahlung.

Nach der Polymerisation werden die Giessformen M geöffnet und die Kontaktlinsen L gegebenenfalls noch weiterbearbeitet, beispielsweise eingefärbt oder hydratisiert. Danach werden die fertigen Kontaktlinsen L vorzugsweise in eine der zugehörigen Giessformhälften 1 oder 2 verpackt und für den Versand oder die Lagerung bereitgestellt.

Selbstverständlich ist die materialabtragende Bearbeitung der Giessformen M₁, M₂, ...... , M_{N} nicht nur auf die Bearbeitung des standardisierten Matrizenteils 2 beschränkt. Falls erforderlich, kann auch die Formgebungsfläche 3 am Patrizenteil 1 für die Kontaktlinsenrückfläche noch weiter bearbeitet werden. Beispielsweise kann auf diese Weise einem sphärischen Mittenbereich der Formgebungsfläche ein asphärischer Randbereich angeschlossen werden. Auch können bereits im Spritzgiessverfahren verschiedene Matrizenteile 2 hergestellt werden, mit unterschiedlichen Krümmungsradien für die Formgebungsfläche 4 für die Kontaktlinsenfrontfläche, während nur ein einziges oder einige wenige Patrizenteile 1 mit standardisierten Formgebungsflächen 3 für die Kontaktlinsenrückfläche erstellt werden. Die Erstellung der weiteren Giessformenvielfalt mit vielen verschiedenen Parametern (Krümmungen, Brechzahlen) erfolgt dann beispielsweise durch Bearbeitung des Patrizenteils 1 allein oder beider Giessformhälften 1 und 2. Da im Anschluss an die Bearbeitung einer der Giessformhälften manchmal noch kleine Rauhigkeiten auftreten und noch ein Polierschritt nötig sein kann, erfolgt jedoch vorzugsweise nur eine Bearbeitung des standardisierten Matrizenteils 2 mit der Formgebungsfläche 4 für die Kontaktlinsenfrontfläche, während die verschiedenen Patrizenteile 1 mit der Formgebungsfläche 2 für die Kontaktlinsenrückfläche im Spritzgiessverfahren hergestellt werden.

Die im Spritzgiessverfahren hergestellten Giessformen M weisen im Bereich der Formgebungsflächen 2 und 4 Wandstärken von etwa 0,5 mm bis etwa 5 mm, vorzugsweise etwa 1,5 mm auf. Der maximale Materialabtrag d in dem anschliessenden Bearbeitungsschritt beträgt von etwa 0,05 mm bis etwa 1,0 mm.

Die vorzugsweise aus Metall gefertigten Formwerkzeuge T₁, T₂, .......... , T_{N} werden nur für einige wenige standardisierte Parameter ausgebildet. So wird das Formwerkzeug für die Kontaktlinsenrückfläche vorzugsweise nur mit wenigen standardisierten, beispielsweise für die üblichen Durchmesser von etwa 8,5 mm bis etwa 15,0 mm hergestellt. Die Krümmungsradien für die verschiedenen Rückflächen werden von etwa 7,2 mm bis etwa 8,6 mm gewählt, beispielsweise in Abstufungen von etwa 0,05 mm oder 0,1 mm. Das Formwerkzeug für die Kontaktlinsenfrontfläche wird entsprechend nur für zwei Kontaktlinsendurchmesser und einen einzigen Krümmungsradius für die Kontaktlinsenfrontfläche vorgesehen. Die Erstellung weiterer Krümmungsradien und damit von Formen für Linsen anderer Brechkraft erfolgt ja vorzugsweise durch materialabtragende Bearbeitung des entsprechenden Matrizenteils. Insbesondere sollen die Formwerkzeuge T₁, T₂, ......, T_{N} für Krümmungsradien der Kontaktlinsenfrontfläche ausgelegt werden, die mit Scheitelbrechwerten der herzustellenden Kontaktlinsen zwischen +25,00 dpt und -25,00 dpt korrespondieren.

Statt der bislang erwähnten materialabtragenden Bearbeitungsverfahren sind selbstverständlich auch materialauftragende additive Verfahren zur Erhöhung der Parametervielfalt anwendbar.

Insgesamt erlaubt das erfindungsgemässe Verfahren die wirtschaftliche Anwendung der einfachen Fullmold-Technologie auch für Kontaktlinsentypen, die nur in kleinen Losgrössen benötigt werden. Durch die gezielte Parametermodifikation durch Bearbeitung bereits fertiger spritzgegossener Standard-Giessformen wird die Anzahl der teuren und aufwendig herzustellenden Formwerkzeuge deutlich verringert und nur auf bestimmte Standardformen reduziert. Die Erstellung der nötigen Giessformenvielfalt erfolgt durch eine anschliessende Bearbeitung der spritzgegossenen Standard-Giessformen nach Bedarf. Durch die Bearbeitung der Giessformen werden alle Nachteile, die eine direkte Bearbeitung der Kontaktlinsenrohlinge mit sich bringt, vermieden. Es erfolgt nur eine Bearbeitung der relativ billigen Kunststoff-Giessformen, nur einwandfreie Giessformen werden weiterverwendet. Im Falle eines Misslingens der gewünschten Formbearbeitung wird nur die jeweilige Form ausgesondert. Die Formen sind einfach in der Handhabung und erlauben bei einer entsprechenden Gestaltung eine einfache Justierung und Fixierung bei der Bearbeitung. Überdies können die Formen auch mit speziellen Schutzzylindern oder ähnlichem für die Formgebungsflächen ausgestattet sein, was eine einfache beschädigungsfreie Lagerung vorgefertigter spritzgegossener Giessformen ermöglicht. Das Verfahren ist für einen hohen Grad der Automatisierbarkeit ausgelegt und erlaubt insbesondere eine einfache Integration in CAE/CAM-Systeme.

## Patentansprüche

1. Verfahren zur Herstellung von Kontaktlinsen, insbesondere Verfahren zur einstufigen Herstellung von weitgehend nachbearbeitungsfreien Kontaktlinsen, bei dem
(a) Formwerkzeuge (T₁, T₂, ...... , T_{N}) hergestellt werden,
(b) die Formwerkzeuge (T₁, T₂, ...... , T_{N}) in Formplatten eingebaut werden,
(c) die Formplatten in ein Spritzgiesswerkzeug eingesetzt werden,
(d) mit Hilfe der Formwerkzeuge (T₁, T₂, ...... , T_{N}) eine Anzahl von Einweg-Giessformen (M₁, M₂, ...... , M_{N}), welche jeweils ein Patrizenteil (1) mit einer Formgebungsfläche (3) für die Kontaktlinsenrückseite und ein Matrizenteil (2) mit einer Formgebungsfläche (4) für die Kontaktlinsenfrontfläche aufweisen, im Spritzgiessverfahren hergestellt werden,
(e) die Kontaktlinsen (L) durch direkte Polymerisation eines Polymerisationsansatzes in den Einweg-Giessformen hergestellt werden,
dadurch gekennzeichnet, dass die Formwerkzeuge (T₁, T₂, ...... , T_{N}) nur für eine beschränkte Anzahl standardisierter Kontaktlinsenparameter (Kontaktlinsendurchmesser, Krümmungsradien der Kontaktlinsenrückfläche, Brechkraft der Kontaktlinse) hergestellt werden, dass die derart erhaltenen spritzgegossenen standardisierten Einweg-Giessformen (M₁, M₂, ...... , M_{N}) nachbearbeitet werden, und dass auf diese Weise die Giessformvielfalt mit unterschiedlichen Kontaktlinsenparametern erhöht wird.

2. Verfahren nach Anspruch 1, dadurch gekennzeichnet, dass die Formwerkzeuge (T₁, T₂, ...... , T_{N}) für die üblichen Kontaktlinsendurchmesser von etwa 8,5 mm bis etwa 15,0 mm hergestellt werden.

3. Verfahren nach Anspruch 1 oder 2, dadurch gekennzeichnet, dass die Formwerkzeuge (T₁, T₂, ...... , T_{N}) für einen Krümmungsradius der Kontaktlinsenrückfläche von etwa 7,2 mm bis etwa 8,6 mm ausgebildet werden.

4. Verfahren nach Anspruch 3, dadurch gekennzeichnet, dass die Krümmungsradien an den verschiedenen Formwerkzeugen (T₁, T₂, ......, T_{N}) etwa in 0,05 mm oder in 0,1 mm Schritten abgestuft werden.

5. Verfahren nach einem der Ansprüche 1-4, dadurch gekennzeichnet, dass die Formwerkzeuge (T₁, T₂, ...... , T_{N}) für Krümmungsradien der Kontaktlinsenfrontfläche ausgelegt werden, die mit Scheitelbrechwerten der herzustellenden Kontaktlinsen zwischen +25,00 dpt und -25,00 dpt korrespondieren.

6. Verfahren nach Anspruch 5, dadurch gekennzeichnet, dass die Formwerkzeuge (T₁, T₂, ...... , T_{N}) nur für einen fixen Krümmungsradius der Kontaktlinsenfrontfläche ausgebildet werden.

7. Verfahren nach einem der vorangehenden Ansprüche, dadurch gekennzeichnet, dass die Formgebungsfläche (4,3) des Matrizenteils (2) und/oder des Patrizenteils (1) nachbearbeitet wird.

8. Verfahren nach einem der vorangehenden Ansprüche, dadurch gekennzeichnet, dass die Nachbearbeitung durch materialabtragende Bearbeitung erfolgt.

9. Verfahren nach einem der vorangehenden Ansprüche, dadurch gekennzeichnet, dass das Matrizenteil (2) und das Patrizenteil (1) im Bereich ihrer Formgebungsflächen (4 und 3) mit Wandstärken von etwa 0,5 mm bis etwa 5,0 mm, vorzugsweise etwa 1,5 mm hergestellt werden.

10. Verfahren nach Anspruch 9, dadurch gekennzeichnet, dass die Formgebungsfläche (4) für die Kontaktlinsenfrontfläche am Matrizenteil (2) durch materialabtragende Bearbeitung verändert wird.

11. Verfahren nach Anspruch 10, dadurch gekennzeichnet, dass der maximale Materialabtrag (d) von etwa 0,05 mm bis etwa 1,0 mm beträgt.

12. Verfahren nach Anspruch 8-11, dadurch gekennzeichnet, dass die materialabtragende Bearbeitung durch spanende Bearbeitung der Giessformhälfte (1 oder 2) in Drehtechnik erfolgt.

13. Verfahren nach Anspruch 12, dadurch gekennzeichnet, dass die spanende Bearbeitung Computer-gesteuert erfolgt.

14. Verfahren nach Anspruch 8-11, dadurch gekennzeichnet, dass die materialabtragende Bearbeitung durch Laserbearbeitung erfolgt.

15. Verfahren nach Anspruch 14, dadurch gekennzeichnet, dass ein EXCIMER-Laser verwendet wird.

16. Verfahren nach Anspruch 14 oder 15, dadurch gekennzeichnet, dass die Ablenkung des Laserstrahls Computer-gesteuert erfolgt.

17. Verfahren nach einem der vorangehenden Ansprüche, dadurch gekennzeichnet, dass die Giessformen (M) zur Herstellung von asphärischen, aplanatischen, bifokalen, multifokalen und torischen Linsen sowie zur Herstellung binärer Optiken modifiziert werden.

18. Verfahren nach Anspruch 8, dadurch gekennzeichnet, dass die Nachbearbeitung der Giessformhälften (1,2) durch materialauftragende additive Verfahren erfolgt.

19. Verfahren nach einem der vorangehenden Ansprüche, dadurch gekennzeichnet, dass die standardisierten Formwerkzeuge (T₁, T₂, ...... , T_{N}) aus Metall hergestellt werden.

20. Verfahren nach einem der vorangehenden Ansprüche, dadurch gekennzeichnet, dass die standardisierten Einweg-Giessformen (M₁, M₂, ...... , M_{N}) aus Kunststoffen, wie z.B. Polypropylen oder Polymethylmethacrylat, gefertigt werden.

## Claims

1. A method for the manufacture of contact lenses, especially a method for the one-step manufacture of contact lenses that largely do not have to be finished, in which
(a) shaping tools (T₁, T₂, ......, T_{N}) are manufactured,
(b) the shaping tools (T₁, T₂, ......, T_{N}) are fitted in mould plates,
(c) the mould plates are inserted into an injection-moulding tool,
(d) using the shaping tools (T₁, T₂, ......, T_{N}) a number of disposable moulds (M₁, M₂, ......, M_{N}), each of which has a male part (1) having a shaping face (3) for the rear side of the contact lens and a female part (2) having a shaping face (4) for the front face of the contact lens, are manufactured in the injection-moulding process,
(e) the contact lenses (L) are manufactured by direct polymerisation of a polymerisation batch in the disposable moulds,
wherein the shaping tools (T₁, T₂, ......, T_{N}) are manufactured for only a limited number of standardised contact lens parameters (contact lens diameter, radii of curvature of the rear face of the contact lens, focal power of the contact lens), the injection-moulded standardised disposable moulds (M₁, M₂, ......, M_{N}) so obtained are finished, and the multiplicity of moulds having different contact lens parameters is thus increased.

2. A method according to claim 1, wherein the shaping tools (T₁, T₂, ......, T_{N}) are manufactured for the customary contact lens diameters of from approximately 8.5 mm to approximately 15.0 mm.

3. A method according to claim 1 or 2, wherein the shaping tools (T₁, T₂, ......, T_{N}) are produced for a radius of curvature of the rear face of the contact lens of from approximately 7.2 mm to approximately 8.6 mm.

4. A method according to claim 3, wherein the radii of curvature on the various shaping tools (T₁, T₂, ......, T_{N}) are graduated in approximately 0.05 mm or in 0.1 mm steps.

5. A method according to any one of claims 1 to 4, wherein the shaping tools (T₁, T₂, ......, T_{N}) are designed for radii of curvature of the front face of the contact lens that correspond to vertex refractions of the contact lenses to be manufactured of from +25.00 dpt to -25.00 dpt.

6. A method according to claim 5, wherein the shaping tools (T₁, T₂, ......, T_{N}) are designed for only a fixed radius of curvature of the front face of the contact lens.

7. A method according to any one of the preceding claims, wherein the shaping face (4, 3) of the female part (2) and/or of the male part (1) is finished.

8. A method according to any one of the preceding claims, wherein the finishing is effected by material-removing machining.

9. A method according to any one of the preceding claims, wherein, in the region of their shaping faces (4 and 3), the female part (2) and the male part (1) are manufactured with wall thicknesses of from approximately 0.5 mm to approximately 5.00 mm, preferably approximately 1.5 mm.

10. A method according to claim 9, wherein the shaping face (4) for the front face of the contact lens is altered at the female part (2) by material-removing machining.

11. A method according to claim 10, wherein the maximum removal d of material is from approximately 0.05 mm to approximately 1.0 mm.

12. A method according to claims 8 to 11, wherein the material-removing machining is effected by machine-cutting the mould halves (1 or 2) using the turning technique.

13. A method according to claim 12, wherein the machine-cutting is computer-controlled.

14. A method according to claims 8 to 11, wherein the material-removing machining is effected by laser machining.

15. A method according to claim 14, wherein an EXCIMER laser is used.

16. A method according to claim 14 or 15, wherein the deflection of the laser beam is computer-controlled.

17. A method according to any one of the preceding claims, wherein the moulds (M) are modified for the manufacture of aspherical, aplanatic, bifocal, multifocal and toroidal lenses as well as for the manufacture of binary optics.

18. A method according to claim 8, wherein the finishing of the mould halves (1, 2) is effected by material-applying additive processes.

19. A method according to any one of the preceding claims, wherein the standardised shaping tools (T₁, T₂, ......, T_{N}) are manufactured from metal.

20. A method according to any one of the preceding claims, wherein the standardised disposable moulds (M₁, M₂, ......, M_{N}) are produced from plastics, such as, for example, polypropylene or polymethyl methacrylate.

## Revendications

1. Procédé de fabrication de lentilles de contact, notamment procédé pour réaliser en une étape des lentilles de contact exemptées dans une large mesure d'usinage de finition, procédé dans lequel :
(a) des outils de moulage (T₁,T₂,.......,T_{N}) sont fabriqués,
(b) des outils de moulage (T₁, T₂, .......,T_{N}) sont mis en place dans des plaques de moulage,
(c) les plaques de moulage sont disposées dans un outillage de moulage par injection,
(d) à l'aide des outils de moulage (T₁, T₂,......,T_{N}), on fabrique dans un procédé de moulage par injection un certain nombre de moules jetables (M₁, M₂,.......,M_{N}), qui comportent chacun une partie mâle de moulage (1) pourvue d'une surface de moulage (3) pour le côté arrière des lentilles de contact et une partie femelle de moulage (2) pourvue d'une surface de moulage (4) pour la surface avant des lentilles de contact,
(e) les lentilles de contact (L) sont fabriquées par polymérisation directe d'un adjuvant de polymérisation dans les moules jetables,
- procédé caractérisé en ce que les outils de moulage (T₁, T₂,.....,T_{N}) seront fabriqués seulement pour un nombre limité de paramètres normalisés de lentilles de contact (diamètre de lentille, rayon de courbure de la surface arrière de lentille, pouvoir de réfraction de la lentille de contact), en ce que les moules jetables normalisés ainsi obtenus par moulage par injection (M₁, M₂,.....,M_{N}) subiront un usinage de finition et en ce que de cette manière la diversité de moules avec des paramètres différents de lentilles de contact sera augmentée.

2. Procédé selon la revendication 1, caractérisé en ce que les outils de moulage (T₁, T₂,.....,T_{N}) seront fabriqués pour les diamètres classiques de lentilles de contact compris entre environ 8,5 mm et environ 15,0 mm.

3. Procédé selon une des revendications 1 ou 2, caractérisé en ce que les outils de moulage (T₁, T₂,.....,T_{N}) seront conçus pour un rayon de courbure de la surface arrière de lentille de contact compris entre environ 7,2 mm et environ 8,6 mm.

4. Procédé selon la revendication 3, caractérisé en ce que les rayons de courbure prévus pour les différents outils de moulage (T₁, T₂,......,T_{N}) seront échelonnés avec des valeurs d'environ 0,05 mm ou de 0,1 mm.

5. Procédé selon l'une des revendications 1 à 4, caractérisé en ce que les outils de moulage (T₁, T₂,..... T_{N}) seront conçus pour des rayons de courbure de la surface avant de lentilles de contact qui correspondent à des valeurs de réfraction frontale des lentilles de contact à fabriquer qui sont comprises entre +25,00dpt et -25,00dpt.

6. Procédé selon la revendication 5, caractérisé en ce que les outils de moulage (T₁, T₂,..... ,T_{N}) seront conçus seulement pour un rayon fixe de courbure de la surface avant des lentilles de contact.

7. Procédé selon l'une des revendications précédentes, caractérisé en ce que la surface de moulage (4,3) de la partie femelle de moulage (2) et/ou de la partie mâle de moulage (1) subira un usinage de finition.

8. Procédé selon l'une des revendications précédentes, caractérisé en ce que l'usinage de finition sera effectué par usinage avec enlèvement de matière.

9. Procédé selon l'une des revendications précédentes, caractérisé en ce que la partie femelle de moulage (2) et la partie mâle de moulage (1) seront réalisées, dans la zone de leurs surfaces de moulage (4 et 3), avec des épaisseurs de paroi comprises entre environ 0,5 mm et environ 5,0 mm, et de préférence d'environ 1,5 mm.

10. Procédé selon la revendication 9, caractérisé en ce que la surface de moulage (4) pour la surface avant des lentilles de contact sera modifiée sur la partie femelle de moulage (2) par usinage avec enlèvement de matière.

11. Procédé selon la revendication 10, caractérisé en ce que l'enlèvement maximal de matière
(d) est compris entre environ 0,05 mm et environ 1,0 mm.

12. Procédé selon les revendications 8 à 11, caractérisé en ce que l'usinage avec enlèvement de matière est effectué par usinage avec enlèvement de copeaux sur les moitiés de moule (1 ou 2) en opérant par une technique de tournage.

13. Procédé selon la revendication 12, caractérisé en ce que l'usinage par enlèvement de copeaux est effectué avec commande par ordinateur.

14. Procédé selon les revendications 8 à 11, caractérisé en ce que l'usinage par enlèvement de matière est effectué par traitement au laser.

15. Procédé selon la revendication 14, caractérisé en ce qu'on utilisera un laser-EXCIMER.

16. Procédé selon la revendication 14 ou 15, caractérisé en ce que la direction du rayonnement laser s'effectue avec commande par ordinateur.

17. Procédé selon l'une des revendications précédentes, caractérisé en ce que les moules (M) seront modifiés pour la fabrication de lentilles non sphériques, non planes, bifocales, multifocales et toriques ainsi que pour la fabrication de systèmes optiques binaires.

18. Procédé selon la revendication 8, caractérisé en ce que l'usinage de finition des moitiés de moule (1,2) sera effectué par un processus supplémentaire opérant par dépôt de matière.

19. Procédé selon l'une des revendications précédentes, caractérisé en ce que les outils de moulage normalisés (T₁, T₂,..... , T_{N}) seront fabriqués en métal.

20. Procédé selon l'une des revendications précédentes, caractérisé en ce que les moules jetables normalisés (M₁, M₂,....., M_{N}) seront fabriqués en matière plastique, comme par exemple du polypropylène ou du polyméthylméthacrylate.
